# EUROPÄISCHE PATENTSCHRIFT

(11) **EP 0 737 766 B1**
(45) Veröffentlichungstag und Bekanntmachung des Hinweises auf die Patenterteilung: **29.03.2000**
(21) Anmeldenummer: 95810249.3
(22) Anmeldetag: 12.04.1995
(51) Int. Cl.: D03J 1/00, F16N 15/00, F16N 7/32

(54) **Verfahren zum Schmieren von aufeinander gleitenden Flächen und Webmaschine zur Anwendung des Verfahrens**
Device for the lubrification of superposed sliding surfaces and loom to use the process
Procédé de lubrification de surfaces glissant l'une sur l'autre et métier à tisser pour l'application du procédé

(43) Veröffentlichungstag der Anmeldung: 16.10.1996
(73) Patentinhaber: SULZER TEXTIL AG, 8630 Rüti (CH)
(72) Erfinder: Stacher, Angelo, CH-9320 Arbon (CH)
(74) Vertreter: Heubeck, Bernhard

(56) Entgegenhaltungen:
- EP-A- 0 502 823
- EP-A- 0 643 253
- DE-B- 1 176 779
- US-A- 2 178 932

## Beschreibung

Die Erfindung betrifft eine Webmaschine.

Die DE-A-1 176 779 offenbart ein Verfahren, zum Schmieren von aufeinander gleitenden Flächen von metallisierten Teilen, bei dem anstelle von Graphit ein pulverförmiger Kunststoff verwendet wird, um die sichtbare Verschmutzung der Gewebe oder Gewirke zu vermeiden. Zur Überwindung dieser Schwierigkeiten wird das Trockenschmierpulver von Zeit zu Zeit zwischen die aufeinander gleitenden Teile gestreut oder geblasen.

Als nachteilig erweist sich bei diesem Verfahren das willkürliche Aufbringen des Trockenschmierpulvers.

Hier will die Erfindung Abhilfe schaffen. Der Erfindung liegt die Aufgabe zugrunde, as Schmieren von aufeinander gleitenden metallischen Flächen in einer Webmaschine zu verbessern, derart, dass ausgehend von der minimal erforderlichen Schmierleistung die Schmierstelle direkt mit Schmierstoff beaufschlagt wird.

Diese Aufgabe wird durch eine Webmaschine gemäß Anspruch 1 gelöst. Die Ansprüche 2-4 betreffen vorteilhafte Weiterbildungen.

Im folgenden wird die Erfindung anhand der beiliegenden Zeichnung erläutert.

Es zeigen:
- Fig. 1: eine bevorzugte Ausführungsform einer erfindungsgemässen Schmiervorrichtung;
- Fig. 2: eine Modifikation der in Fig. 1 gezeigten Ausführungsform,
- Fig. 3: einen Schnitt entlang der Linie III - III in Fig. 2,
- Fig. 4: eine andere Ausführungsform einer erfindungsgemässen Schmiervorrichtung,
- Fig. 5: eine teilweise aufgebrochen dargestellte Ansicht in Richtung des Pfeiles A in Fig. 4 und
- Fig. 6: eine weitere Ausführungsform einer erfindungsgemässen Schmiervorrichtung.

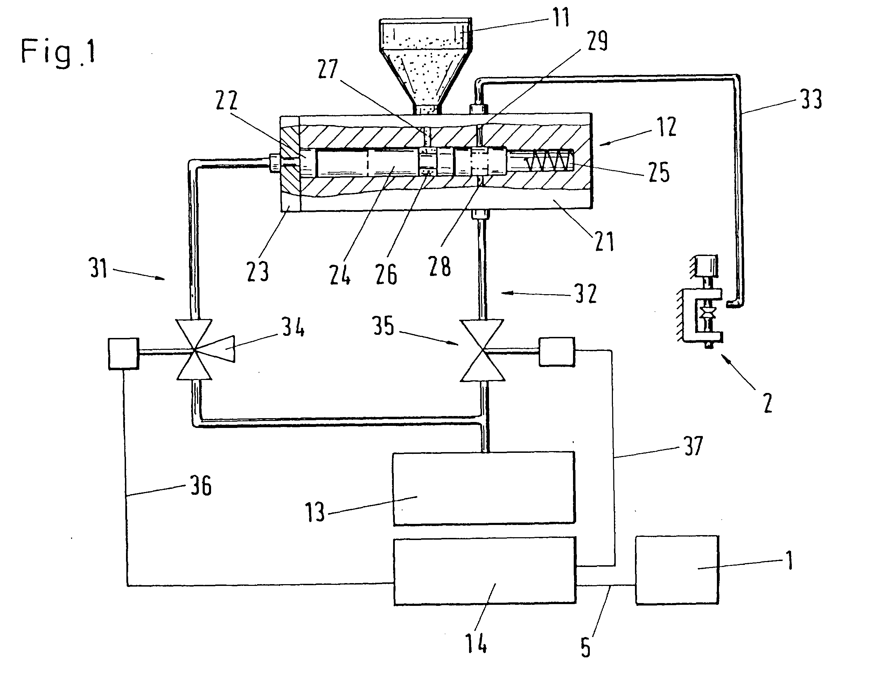

Die Fig. 1 zeigt eine Ausführungsform einer Schmiervorrichtung, die in einer nicht näher dargestellten Webmaschine vorgesehen ist. Die Webmaschine enthält eine Steuereinrichtung 1 mit einem Taktgeber und eine Funktionseinheit 2, z. B. eine Fadenklemme.

Bei der hier in Rede stehenden Erfindung wird die Schmierstelle kontinuierlich oder diskontinuierlich mit pulverförmigem Kunststoff beaufschlagt. Hierzu wird in einem ersten Schritt die Schmierleistung für die Schmierstelle festgelegt. Die Schmierleistung wird anhand von Schmiermittelbedarf pro Zeiteinheit bestimmt.

Bei der kontinuierlichen Beaufschlagung wird in einem zweiten Schritt die Drehzahl eines Förderorgas und die Strömumgsgeschindigkeit der Luft festgelegt.

Bei der diskontinuierlichen Beaufschlagung wird in einem zweiten Schritt die Folge der Schmierimpulse festgelegt. Die Impulsfolge ist vom Webmaschinentakt abhängig, welcher durch eine Umdrehung der Hauptantriebswelle bestimmt ist, derart, dass die Anblasung der Schmierstelle bei Erreichen eines vorgegebenen Drehwinkel einsetzt bzw. in einem vorgegebenen Drehwinkelbereich durchgeführt wird.

Nachfolgend wird ausgehend von der Schmierleistung und der Impulsfolge in einem dritten Schritt die Schmierstoffmenge und das zur Förderung benötigte Luftvolumen festgelegt. Bei einer Webmaschine mit unterschiedlichen Schmierstellen wird von einer Pulver/Luft-Mischung im Verhältnis von mindestens 1 : 700 Vol-% ausgegangen.

Der Taktgeber 1 ist mit der Hauptantriebswelle der Webmaschine verbunden und gibt über eine Signalleitung ein Taktsignal zur Steuerung der Schmiervorrichtung ab. Das Taktsignal umfasst 360 Impulse.

Wie die Fig. 1 zeigt enthält die Vorrichtung einen Vorratsbehälter 11 für einen Schmierstoff aus pulverförmigem Kunststoff, insbesondere Polytetrafluoräthylen, eine Dosiereinrichtung 12, um eine Schmierstoffmenge bereitzustellen, eine Druckluftquelle 13, die über eine Leitungsordnung mit der Dosiereinheit verbunden ist und eine Steuereinrichtung 14.

Die Dosiereinheit 12 hat ein einseitiges offenes Gehäuse 21 mit einem zylindrischen Hohlraum 22 und einem Deckel 23, welcher den Hohlraum abschliesst, einen Kolben 24, der im Hohlraum zwischen einer Ruhestellung und einer Arbeitsstellung verschiebbar angeordnet ist und eine Rückstellfeder 25 für den Kolben.

Der Kolben 24 weist einen Abschnitt mit geringerem Durchmesser auf, so dass bei im Hohlraum 22 eingesetzten Kolben eine ringförmige Kammer 26 vorhanden ist. Das Volumen der Kammer 26 ist auf die benötigte Schmierstoffmenge abgestimmt.

In dem Gehäuse 21 ist einer erste Bohrung 27, welche den Vorratsbehälter 11 mit dem Hohlraum 22 verbindet, eine zweite Bohrung 28, über welcher der Hohlraum 22 mit der Druckluftquelle 13 verbunden ist und eine dritte Bohrung 29 vorgesehen, über welcher der Hohlraum 22 mit der Schmierstelle verbunden ist. Die erste Bohrung 27 ist so angeordnet, dass sie mit der Kammer 26 kommunizieren, wenn der Kolben 24 die Ruhestellung einnimmt. Die zweite und dritte Bohrung 28 und 29 sind koaxial und so angeordnet, dass sie mit der Kammer 26 kommunizieren, wenn der Kolben 24 die Arbeitsstellung einnimmt.

Die Leitungsanordnung umfasst eine Steuerleitung 31 um den Kolben 24 zu verschieben, eine Förderleitung 32, um den Schmierstoff aus der Dosiereinheit 12 zu fördern und eine Zufuhrleitung 33, um den Schmierstoff zu einer Schmierstelle zu leiten. In der Steuerleitung 31 und der Förderleitung 32 ist jeweils ein Ventil 34, 35 vorgesehen. Die Steuereinrichtung 14 enthält nicht näher dargestellte Steuereinheiten, die über Signalleitungen 36, 37 mit den mit den Ventilen 34,35 verbunden sind.

Die Fig. 1 zeigt die Schmiervorrichtung in der Ruhestellung. In dieser Stellung kommuniziert die Kammer 26 mit dem Vorratsbehälter, so dass Schmierstoff in die Kammer eintritt.

Anhand des Taktes erzeugt die Steuereinrichtung 14 einen Steuerimpuls, welcher das Ventil 34 in der Steuerleitung 31 öffnet und einen Förderimpuls, welcher das Ventil 35 in der Förderleitung 32 öffnet. In diesem Zusammenhang wird darauf hingewiesen, dass der Steuer- und Förderimpuls gleichzeitig oder gestaffelt in der Steuereinrichtung erzeugt wird. Über die Steuerleitung 31 wird der Kolben 24 mit Druckluft aus der Druckluftquelle 13 beaufschlagt und dadurch in die Arbeitsstellung verschoben. In der Arbeitsstellung wird das Schmierpulver mittels der durch die Förderleitung 32 strömende Druckluft aus der Druckluftquelle 13 durch die Zuführleitung 33 zur Schmierstelle gefördert und ein Pulver/Luft-Gemisch auf die zu schmierende Fläche geblasen. Die Rückstellung des Kolbens 24 erfolgt durch die Feder 25.

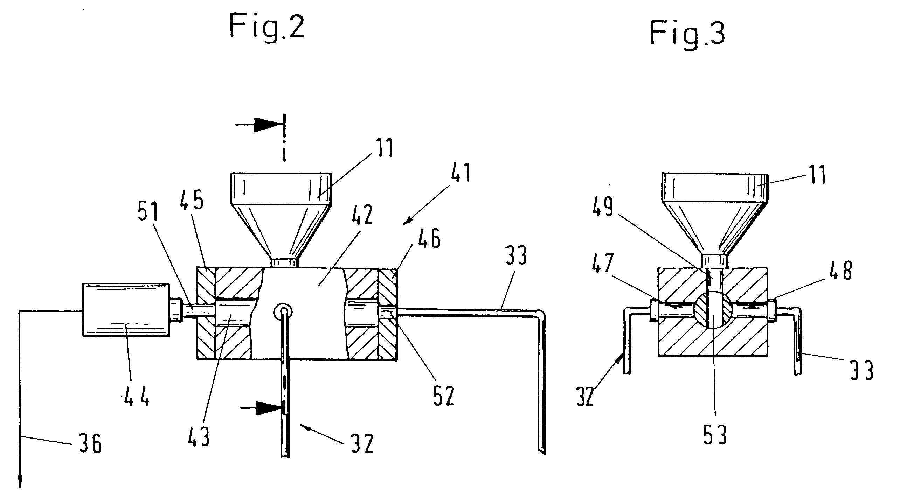

Die Figuren 2 und 3 zeigen eine Modifikation der Vorrichtung gemäss Fig. 1, welche die Dosiereinheit betrifft.

Die Dosiereinheit 41 besteht im wesentlichen aus einem Gehäuse 42, einem Dosierorgan 43 und einer Antriebseinrichtung 44. Das Dosierorgan 43 ist drehbeweglich im Gehäuse angeordnet.

Hierzu weist das Gehäuse eine Durchgangsbohrung und zwei Lagerschilder 45, 46 auf. Im Gehäuse 42 sind eine erste Bohrung 47, die mit der Steuerleitung 32 in Verbindung steht und eine zweite Bohrung 48 vorgesehen, die mit der Zuführleitung 33 in Verbindung steht. Die erste und zweite Bohrung 47, 48 münden jeweils in der Durchbohrung des Gehäuses 42 und koaxial angeordnet, wobei ihre Mittellinien durch das Zentrum der Durchbohrung verlaufen. Das Gehäuse weist ferner eine dritte Bohrung 49 auf, die einerseits mit dem Vorratsbehälter 11 in Verbindung steht und andererseits in die Durchbohrung im Gehäuse 42 mündet, wobei die Mittellinie der dritten Bohrung 49 quer zu der ersten und zweiten Bohrung 47, 48 und durch das Zentrum der Durchbohrung im Gehäuse 42 verläuft. Das Dosierorgan 43 ist ein zylinderförmiger Körper, der an den Stirnseiten jeweils einen Zapfen 51, 52 und eine radiale Bohrung 53 aufweist. Im montierten Zustand ist das Dosierorgan 43 mit den Zapfen 51, 52 in den Lagerschildern 45, 46 gelagert und so angeordnet, dass die radiale Bohrung 53 auf die erste, zweite und dritte Bohrung 47, 48, 49 ausgerichtet werden kann.

Die Antriebseinrichtung 44 ist an den Zapfen 51 gekoppelt und wird von der Steuereinrichtung 14 angesteuert.

Gegenüber der Vorrichtung gemäss Fig. 1 ist das Dosierorgan 43 ein Drehschieber, der eine Drehbewegung ausführt, wenn er aus der Ruhestellung in die Arbeitsstellung gestellt wird, und der zur Verstellung sowohl in der einen wie in der anderen Richtung durch die Antriebseinrichtung 44 aktiv angetrieben wird. Als Antriebseinrichtung 44 kann ein Schrittmotor oder Elektromagnet verwendet werden.

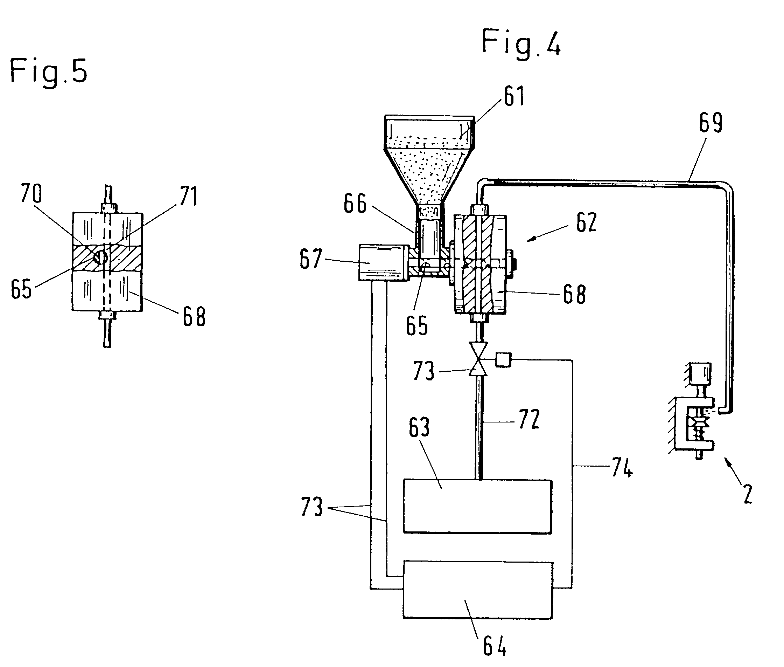

Die in Fig. 4 dargestellte Vorrichtung ist zum Schmieren einer Funktionseinheit 2 vorgesehen und weist einen Vorratsbehälter 61 für den Schmierstoff, eine Dosiereinheit 62, um eine Schmierstoffmenge bereitzustellen, eine Druckluftquelle 63, die über eine Leitungsanordnung mit der Dosiereinheit 62 verbunden ist und eine Steuereinrichtung 64 auf. Die Dosiereinheit 62 enthält eine Förderschnecke 65, ein Gehäuse mit einem Einlass 66, der mit dem Vorratsbehälter 61 verbunden ist, eine Antriebseinrichtung 67 für die Förderschnecke und einen Anschlussteil 68, der mit der Druckluftquelle 63 und einer Förderleitung 69 verbunden ist, um den bereitgestellten Schmierstoff zur Schmierstelle zu fördern. Die Antriebseinrichtung 67 besteht aus einem Elektromotor mit stufenloser Drehzahlregulierung oder einem Schrittmotor. Der Anschlussteil 68 ist am Gehäuse der Förderschnecke angeordnet und weist eine zweite Bohrung 71 auf, die quer zur ersten Bohrung 70 so angeordnet ist, dass die Förderschnecke 65 mindestens teilweise in die zweite Bohrung 71 hineinragt (Fig. 5). Der Anschlussteil 68 ist über eine Leitung 72 mit einem Ventil 73 mit der Druckluftquelle verbunden. Die Förderteilung 69 ist zu einer Funktionseinheit 2 geführt, welche die Schmierstelle aufweist. Die Steuereinrichtung 64 weist nicht dargestellte Steuereinheiten auf, die über Signalleitungen 74 bzw. 75 mit der Antriebseinheit 67 bzw. mit dem Ventil 73 verbunden sind. Die Steuereinheiten sind so ausgestaltet, dass diese Steuersignale für ein kontinuierliches und/oder diskontinuierlichen Aufbringen von Schmierstoff erzeugen können.

Nachfolgend wird die Funktionsweise der vorstehend beschriebenen Vorrichtung erläutert, die sowohl für ein kontinuierliches als auch diskontinuierliches Aufbringen des Schmierpulvers geeignet ist. Das Schmierpulver rinnt aus dem Vorratsbehälter 61 durch den Einlass 66 auf die Förderschnecke 65 und wird von dieser zum Anschlussteil 66 gefördert. Bei der Ausführungsform zum kontinuierlichen Aufbringen wird die Förderschnecke 65 von einem Elektromotor 67 mit stufenlos regelbarer Drehzahl angetrieben, so dass eine Schmiermittelmenge kontinuierlich in die Bohrung 71 des Anschlussteiles 66 gefördert wird. Diese Schmiermittelmenge wird durch einen kontinuierlichen Luftstrom aus der Druckluftquelle 63 zur Schmierstelle gefördert, wobei die Förderung durch das Ventil 73 geregelt wird. Hierbei werden die Drehzahl und die Ventilstellung durch die entsprechenden Steuereinheiten der Steuereinrichtung 64 vorgegeben. Bei der Ausführungsform zum diskontinuierlichen Aufbringen wird eine bestimmte Schmierstoffmenge durch die Bohrung 71 gefördert und mittels Luft aus der Druckluftquelle 63 impulsweise auf die Schmierstelle aufgebracht wird, wobei die Förderung durch das Ventil 73 gesteuert wird.

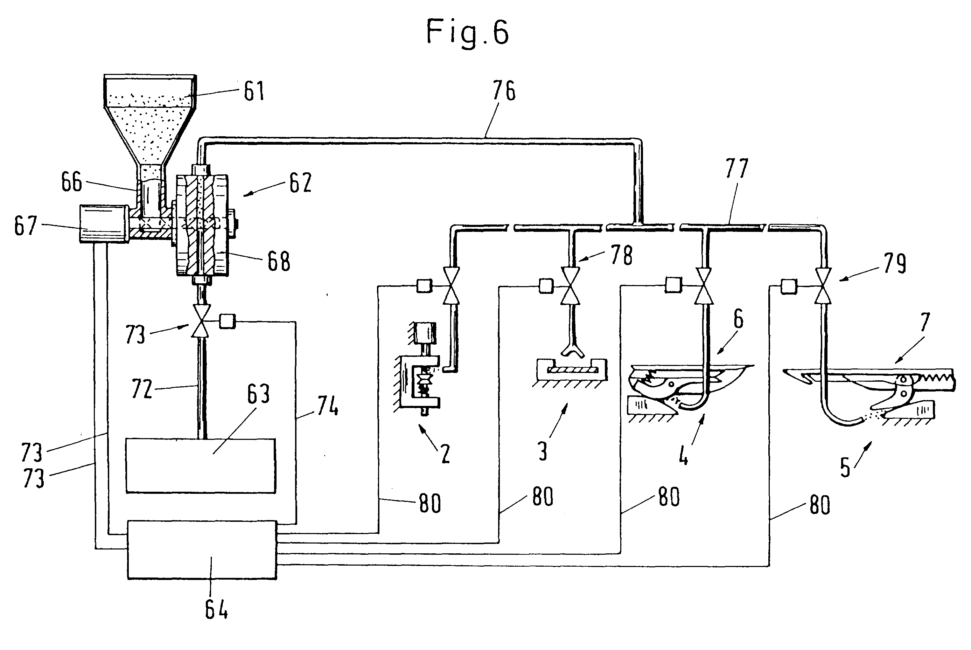

Es wird auf Fig. 6 Bezug genommen, die eine Ausführungsform der Vorrichtung zum kontinuierlichen Aufbringen von Schmierstoff zeigt. Diese Vorrichtung unterscheidet sich von der in den Fig. 4 und 5 dargestellten Vorrichtung dadurch, dass mehrere Funktionseinheiten vorgesehen sind z.B. eine Fadenklemme 2, eine Einrichtung 3 zur Führung eines Greiferbandes sowie Einrichtungen 4, 5 zum Oeffnen der Klemmen eines Bringer- bzw. Hohlergreifers 6, 7. Die Vorrichtung enthält ein Leitungssystem mit einer Hauptleitung 76, einer Sammelleitung 77 und Zuführleitung 78, die jeweils ein Ventil 79 aufweisen. Die Ventile sind jeweils über Signalleitungen 80 mit der Steuereinrichtung 64 verbunden. Die Funktionsweise der Vorrichtung entspricht jener der Fig. 4, bei kontinuierlichem Betrieb, wobei zu beachten ist, dass die Zufuhr von Schmierstoff zu mindestens einer Funktionseinheit 2, 3, 4, 5 möglich ist.

Bei dem Verfahren wird ausgehend von der erforderlichen Schmierleistung und in Abhängigkeit eines Maschinentaktes eine Abfolge von Impulsen erzeugt und eine Schmierstelle kontinuierlich und/oder diskontinuierlich mit einem Pulver/Luft-Gemisch beaufschlagt.

Die Webmaschine ist mit einer Schmiervorrichtung mit einer Dosiereinheit 12, einer Druckluftquelle 13 und einer Steuereinrichtung 14 versehen, um das Pulver/Luft-Gemisch zu erzeugen und an eine Schmierstelle zu fördern.

## Patentansprüche

1. Webmaschine, welche eine Mehrzahl von Funktionseinheiten, die jeweils mindestens eine Schmierstelle aufweisen und eine Einrichtung zur Steuerung der Webmaschine enthält, die einen Taktgeber aufweist, mit einer Vorrichtung zur kontinuierlichen und/oder diskontinuierlichen Beaufschlagung von mindestens einer mindestens eine Schmierstelle aufweisende Funktionseinheit (2;61,62,63) mit einem mit Luft vermischten pulverförmigen Feststoffschmiermittel in dosierter Menge und mit einer Steuerheit (14), die mit der Maschinensteuereinrichtung signalübertragend verbunden ist und die Vorrichtung zur Deckung des Schmierstoffbedarfs der Funktionseinheit (2;61,62,63) in Abhängigkeit des Webmaschinentaktes programmgemäss steuert.

2. Webmaschine nach Anspruch 1, wobei die Vorrichtung einen Lagerbehälter (11) für den Schmierstoff, eine Dosiereinheit (12) zur Bereitstellung einer Schmierstoffmenge und eine Druckluftquelle (13) zur Beförderung des Schmierstoffes zu einer Schmierstelle enthält.

3. Webmaschine nach einem der Ansprüche 1 oder 2 wobei die Dosiereinheit (12) ein Dosierorgan (24,43,63) zum Bereitstellen der Schmierstoffmenge aufweist und dass die Dosiereinheit (12) eine pneumatische oder elektrische Antriebseinrichtung aufweist.

4. Webmaschine nach Anspruch 3, wobei das Dosierorgan ein Kolben (23), ein Schieber (43) oder eine Förderschnecke (63) ist.

## Claims

1. Weaving machine which contains a plurality of functional units, each having at least one lubrication point, and a means for controlling the weaving machine, said means having a timing generator, there being an apparatus for the continuous and/or discontinuous treatment of at least one functional unit (2; 61, 62, 63) having at least one lubricant point with a metered quantity of a powder-like, solid lubricant mixed with air, and a control unit (14) which is connected in signal-transmitting manner to the machine controlling means and controls the apparatus for covering the lubricant requirement of the functional unit (2; 61, 62, 63) in accordance with a program in dependence on the weaving machine cycle.

2. Weaving machine in accordance with claim 1, wherein the apparatus contains a storage container (11) for the lubricant, a metering unit (12) for preparing a quantity of lubricant and a pressure air source (13) for conveying the lubricant to a point of lubrication.

3. Weaving machine in accordance with claim 1 or 2, wherein the metering unit (12) has a metering member (24, 43, 63) for preparing the quantity of lubricant; and that the metering unit (12) has a pneumatic or electrical drive means.

4. Weaving machine in accordance with claim 3, wherein the metering member is a piston (23), a slider (43), or a conveying screw (63).

## Revendications

1. Métier à tisser, qui contient plusieurs unités de fonctionnement qui présentent chacune au moins un emplacement à lubrifier et une installation de commande du métier à tisser qui présente un rythmeur, avec un dispositif pour la sollicitation continue et/ou discontinue d'au moins une unité de fonctionnement (2 ; 61, 62, 63) présentant au moins un emplacement à lubrifier, avec un lubrifiant pulvérulent de matières solides, mélangé avec de l'air en une quantité dosée et avec une unité de commande (14), qui est reliée à l'unité de commande de la machine en vue de la transmission des signaux et qui commande, selon un programme, le dispositif pour couvrir le besoin en lubrifiant de l'unité de fonctionnement (2 ; 61, 62, 63), en fonction de la cadence du métier à tisser.

2. Métier à tisser selon la revendication 1, où le dispositif comprend un récipient de stockage (11) pour le lubrifiant, une unité de dosage (12) pour la mise à disposition d'une quantité de lubrifiant et une source d'air comprimé (13) pour convoyer le lubrifiant à un emplacement à lubrifier.

3. Métier à tisser selon l'une des revendications 1 ou 2, où l'unité de dosage (12) présente un organe de dosage (24, 43, 63) pour la mise à disposition de la quantité de lubrifiant, et que l'unité de dosage (12) présente une installation d'entraînement pneumatique ou électrique.

4. Métier à tisser selon la revendication 3, où l'organe de dosage est un piston (23), un tiroir (43) ou une vis de convoyage (63).
